# EUROPEAN PATENT APPLICATION

(11) **EP 4 672 570 A1**
(43) Date of publication of application: **31.12.2025**
(21) Application number: 25185412.1
(22) Date of filing: 26.06.2025
(51) Int. Cl.: H02K 5/22, H02K 11/33, B60R 16/00, H01R 13/631

(54) **ELECTRICAL CONNECTOR, ELECTRIC DRIVE UNIT AND VEHICLE**

(30) Priority: 28.06.2024 CN 202410864934
(71) Applicant: Valeo eAutomotive Germany GmbH, 91056 Erlangen (DE)
(72) Inventor: ZHANG, Trakis-Qi, Shanghai 200233 (CN); YING, Renlong, Shanghai 200233 (CN); LUO, Sheng, Shanghai 200233 (CN); MIAO, Haiping, Shanghai 200233 (CN); WANG, Paddy-Xiao, Shanghai 200233 (CN); DANG, Rongqian, Shanghai 200233 (CN)
(74) Representative: Valeo Powertrain Systems

(57) **Abstract**

An electrical connector (10) for electrically connecting an electric motor (20) to an electric power module (30), the electrical connector (10) comprising at least one conductor (100a, 100b, 100c), each conductor (100a, 100b, 100c) comprising: a first connecting part, configured to be connected to a motor busbar of the electric motor (20); a second connecting part, configured to be connected to a module busbar of the electric power module (30); wherein the electrical connector (10) further comprises a tolerance-absorbing structure arranged on at least one of the first connecting part (110a, 110b, 110c) and the second connecting part (120a, 120b, 120c) on the corresponding conductor (100a, 100b, 100c), the tolerance-absorbing structure being configured to absorb installation tolerance between the motor busbar (210a, 210b, 210c) and the corresponding module busbar (320a, 320b, 320c) in at least two different directions.

## Description

### TECHNICAL FIELD

The present disclosure relates to an electrical connector, in particular to an electrical connector for electrically connecting an electric motor to an electric power module. The present disclosure further relates to an electric drive unit comprising such an electrical connector, and a vehicle comprising the electric drive unit.

### BACKGROUND

The use of flexible braided leads to establish an electrical connection between an electric motor and an electric power module of an inverter is known in the prior art. This generally requires the length of the leads to be precisely controlled in order to realize a connection; otherwise, effective connection will be difficult to achieve. The problem of effective connection being difficult to achieve is especially pronounced in cases where there is tolerance in the corresponding connecting parts of the electric motor and the inverter, or there is relative positioning tolerance therebetween. In addition, tooling is needed to support the leads in the process of fixing the leads, further complicating the connection task.

Thus, there is a need for a novel electrical connector that is able to effectively and conveniently absorb tolerance in corresponding connecting parts of an electric motor and an inverter or relative positioning tolerance therebetween.

### SUMMARY OF THE INVENTION

To this end, the present disclosure proposes an electrical connector for electrically connecting an electric motor to an electric power module. According to an embodiment, the electrical connector comprises at least one conductor, each conductor comprising: a first connecting part, configured to be connected to a motor busbar of the electric motor; a second connecting part, configured to be connected to a module busbar of the electric power module; wherein the electrical connector further comprises a tolerance-absorbing structure arranged on at least one of the first connecting part and the second connecting part on the corresponding conductor, the tolerance-absorbing structure being configured to absorb installation tolerance between the motor busbar and the corresponding module busbar in at least two different directions.

Thus, in the present disclosure, due to the fact that the electrical connector is provided with the tolerance-absorbing structure configured to absorb installation tolerance between the motor busbar and the corresponding module busbar in at least two different directions, installation tolerance can be reliably absorbed, i.e. compensated, in at least two different directions; this includes tolerance in the manufacture of the motor busbar and the module busbar, positioning tolerance therebetween, tolerance in the manufacture and positioning of the first connecting part and second connecting part of the conductor of the electrical connector, etc. According to various embodiments, the electrical connector proposed in the present disclosure may further comprise one or more of the following further developments.

In some embodiments, the tolerance-absorbing structure comprises a multi-directionally protruding mounting hole, the multi-directionally protruding mounting hole being configured to have protruding parts in multiple directions, to allow the installation tolerance to be absorbed in multiple directions.

In some embodiments, each said multi-directionally protruding mounting hole is configured to comprise a first elongated extension portion and a second elongated extension portion, wherein the first elongated extension portion extends in a first direction, and the second elongated extension portion extends in a second direction different from the first direction.

In some embodiments, the second elongated extension portion terminates in the first elongated extension portion; or the first elongated extension portion and the second elongated extension portion are configured to intersect each other.

In some embodiments, the conductor comprises a first multi-directionally protruding mounting hole arranged on the first connecting part and a second multi-directionally protruding mounting hole arranged on the second connecting part, wherein:
the first elongated extension portion and the second elongated extension portion of the first multi-directionally protruding mounting hole, and the first elongated extension portion and the second elongated extension portion of the second multi-directionally protruding mounting hole, extend in directions which are all different from one another; or
one of the first elongated extension portion and the second elongated extension portion of the first multi-directionally protruding mounting hole extends in the same direction as one of the first elongated extension portion and the second elongated extension portion of the second multi-directionally protruding mounting hole, and the other of the first elongated extension portion and the second elongated extension portion of the first multi-directionally protruding mounting hole extends in the same direction as the other of the first elongated extension portion and the second elongated extension portion of the second multi-directionally protruding mounting hole.

In some embodiments, the first connecting part is provided with a first tolerance-absorbing structure, the first tolerance-absorbing structure being configured to absorb installation tolerance between the motor busbar and the module busbar in a first direction; the second connecting part is provided with a second tolerance-absorbing structure, the second tolerance-absorbing structure being configured to absorb installation tolerance between the motor busbar and the module busbar in a second direction different from the first direction.

In some embodiments, the first direction and the second direction are mutually orthogonal. This ensures that the abovementioned installation tolerance is absorbed in mutually perpendicular directions.

In some embodiments, the first tolerance-absorbing structure is a first elongated hole elongated in the first direction; and/or the second tolerance-absorbing structure is a second elongated hole elongated in the second direction. More specifically, the first elongated hole and the second elongated hole each extend in an elongated shape. Additionally, the first elongated hole and the second elongated hole each may be closed or comprise at least one open end.

In some embodiments, the first connecting part and the second connecting part are configured to be parallel to each other or coplanar. This allows more flexible relative positioning of the motor and the electric power module.

In some embodiments, the first connecting part and the second connecting part are configured to be perpendicular to each other. This allows more flexible relative positioning of the motor and the electric power module, and allows installation tolerance to be absorbed in a greater number of directions.

In some embodiments, the conductor is configured to be in the form of a plate and able to deform, for example elastically, in a third direction which is orthogonal to the first direction and the second direction; this allows possible installation tolerances to be compensated in all directions.

In some embodiments, the electrical connector comprises three conductors, each of the conductors being configured to be connected to one phase of the electric motor.

In some embodiments, the electrical connector further comprises an insulating holder, the insulating holder covering a remaining portion of the conductor other than the first connecting part and the second connecting part. This ensures electrical safety.

In some embodiments, insulating holder is configured to be elastically deformable. This allows corresponding deformation of the conductor.

In some embodiments, the insulating holder is provided with a hollowed-out part. The hollowed-out part enhances the elastic deformation ability of the insulating holder.

In some embodiments, the insulating holder is provided with a mounting structure, the mounting structure being configured to be mounted to the electric motor or the electric power module.

Another aspect of the present disclosure relates to an electric drive unit, comprising an electric power module and an electric motor, and also comprising an electrical connector according to any one of the embodiments described above, and thus having corresponding advantages.

Another aspect of the present disclosure relates to a vehicle, comprising the electric drive unit as described above.

### BRIEF DESCRIPTION OF THE DRAWINGS

In order to explain the technical solution of embodiments of the present disclosure more clearly, the drawings that need to be used in the embodiments will be briefly described below. It should be understood that the drawings below show only some embodiments of the present disclosure, so they should not be regarded as limiting the scope. Those skilled in the art could obtain other related drawings based on these drawings without inventive effort. In the drawings:
Fig. 1 is a partial 3D perspective drawing of an electric drive unit according to an exemplary embodiment.
Fig. 2 is a 3D perspective drawing of an electrical connector according to an exemplary embodiment.
Fig. 3 shows a 3D perspective drawing of the electrical connector shown in Fig. 2, from another angle.
Fig. 4 shows a 3D perspective drawing of conductors of an electrical connector according to an exemplary embodiment, connected to motor busbars and module busbars.
Fig. 5 shows a partial 3D drawing of a multi-directionally protruding mounting hole serving as a tolerance-absorbing structure, according to an exemplary embodiment.
Fig. 6 shows a partial 3D drawing of a multi-directionally protruding mounting hole serving as a tolerance-absorbing structure, according to another exemplary embodiment.
Fig. 7 shows a partial 3D drawing of a multi-directionally protruding mounting hole serving as a tolerance-absorbing structure, according to another exemplary embodiment.
Fig. 8 shows a partial 3D drawing of an elongated hole with an open end, serving as a first tolerance-absorbing structure, according to an exemplary embodiment.

### DETAILED DESCRIPTION

An electrical connector and an electric drive unit according to embodiments of the present disclosure are described in detail below with reference to the drawings. In order to make the objectives, technical solutions and advantages of the present practical disclosure clearer, the technical solutions in the embodiments of the present disclosure will be clearly and completely described below in conjunction with the drawings in the embodiments of the present disclosure; obviously, the embodiments described are some, not all, of the embodiments of the present disclosure.

Thus, the detailed description below of embodiments of the present disclosure provided in conjunction with the drawings is not intended to limit the claimed scope of the present disclosure, and merely shows selected embodiments of the present disclosure. All other embodiments obtained by those skilled in the art on the basis of the embodiments in the present disclosure without inventive effort are included in the scope of protection of the present disclosure.

Unless otherwise defined in the context, the singular includes the plural. Throughout this description, the terms "comprising", "having", etc. are used herein to specify the existence of the mentioned characteristic, number, step, operation, element, component or combination thereof, without ruling out the existence or addition of one or more other characteristics, numbers, steps, operations, elements, components or combinations thereof.

In addition, even though terms including ordinal numbers such as "first" and "second" can be used to describe various components, these components are not restricted by these terms, which are merely used to distinguish one element from another. For example, without departing from the scope of the present disclosure, a first component may be called a second component and, similarly, a second component may be called a first component.

In the description of the present invention, it is necessary to understand that the orientation or position relationship indicated by terms such as "up", "down", "left", "right", "inside", and "outside" is based on the orientation or position relationship shown in the drawings, or the orientation or position relationship of usual placement when the disclosed product is in use, or the orientation or position relationship that is commonly understood by those skilled in the art, and is only for the convenience of describing the present disclosure and simplifying the description, rather than indicating or implying that the device or element referred to must have a specific orientation and be constructed and operated in a specific orientation, so must not be construed as limiting the present disclosure.

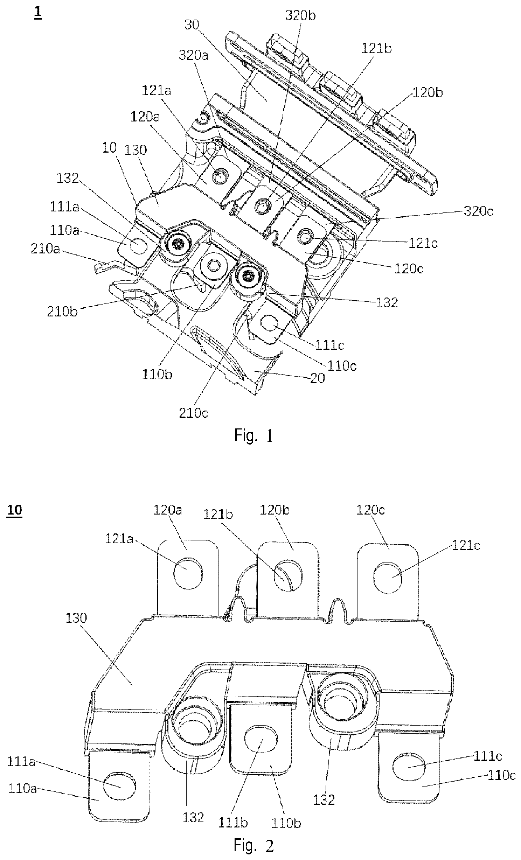

As shown in Figs. 1 - 3, the present disclosure proposes an electrical connector 10, for electrically connecting an electric motor 20 to an electric power module 30 of an inverter or converter. The electric motor 20 is for example an electric motor of a vehicle that is at least partly driven by electricity, wherein the electric motor is installed in a drivetrain of the vehicle. According to an embodiment, the electrical connector 10 comprises at least one conductor 100a, 100b, 100c connected between the electric motor 20 and the power module 30, each conductor 100a, 100b, 100c comprising a first connecting part 110a, 110b, 110c and a second connecting part 120a, 120b, 120c. The first connecting parts 110a, 110b, 110c of the corresponding conductors 100a, 100b, 100c of the electrical connector 10 may be configured to be connected to corresponding motor busbars 210a, 210b, 210c of the electric motor. In an embodiment, the motor busbars 210a, 210b, 210c are for example connected to corresponding phases (not shown) of stator windings of the electric motor 20. In some embodiments, as shown in Figs. 1 - 4, the electrical connector 10 may comprise three conductors 100a, 100b, 100c, wherein each conductor 100a, 100b, 100c may be configured to be connected to one phase of the electric motor 20. The second connecting parts 120a, 120b, 120c of the corresponding conductors 100a, 100b, 100c of the electrical connector 10 may be configured to be connected to corresponding module busbars 320a, 320b, 320c of the electric power module 30. In addition, the electrical connector 10 may further comprise a tolerance-absorbing structure arranged on at least one of the first connecting parts 110a, 110b, 110c and second connecting parts 120a, 120b, 120c on the corresponding conductors 100a, 100b, 100c. In an embodiment, the tolerance-absorbing structure is configured to absorb or compensate an installation tolerance between the motor busbar 210a, 210b, 210c and the corresponding module busbar 320a, 320b, 320c, in at least two different directions, specifically a first direction and a second direction. Demonstratively but not exclusively, installation tolerances include tolerance in the manufacture of the motor busbar 210a, 210b, 210c and the module busbar 320a, 320b, 320c, positioning tolerance therebetween, tolerance in the manufacture of the first connecting part 110a, 110b, 110c and second connecting part 120a, 120b, 120c of the conductor 100a, 100b, 100c of the electrical connector 10, and positioning tolerance between these and the corresponding motor busbar 210a, 210b, 210c and module busbar 320a, 320b, 320c.

It should be noted that, in the sense of the present text, a particular direction more specifically means two directions of elongation along a straight line representing this direction; for example, a first direction includes two directions of elongation of a first straight line representing the first direction.

In some embodiments, the first connecting parts 110a, 110b, 110c and second connecting parts 120a, 120b, 120c of at least one of the conductors 100a, 100b, 100c of the electrical connector 10 may be configured to extend parallel to each other, or to be coplanar. In an alternative embodiment, the first connecting parts 110a, 110b, 110c and second connecting parts 120a, 120b, 120c of at least one of the conductors 100a, 100b, 100c of the electrical connector 10 may be configured to extend transversely to each other. In another embodiment, the first connecting parts 110a, 110b, 110c and second connecting parts 120a, 120b, 120c of at least one of the conductors 100a, 100b, 100c of the electrical connector 10 may be configured to extend perpendicularly to each other.

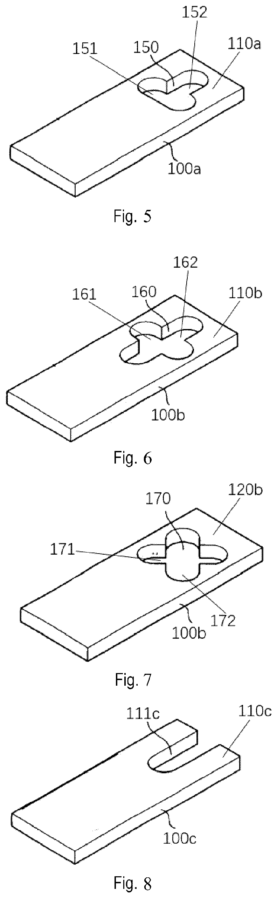

In some embodiments, as shown in Figs. 5 - 7, the tolerance-absorbing structure comprises a multi-directionally protruding mounting hole 150, 160, 170 arranged on at least one of the first connecting part and second connecting part of the corresponding conductor of the electrical connector 10, wherein the multi-directionally protruding mounting hole 150, 160, 170 is configured to be able to have protruding parts in multiple directions, to allow installation tolerance to be absorbed or compensated in multiple directions. A multi-directionally protruding mounting hole 150 arranged on the first connecting part 110a of the first conductor 100a of the electrical connector 10 is shown demonstratively in Fig. 5. A first multi-directionally protruding mounting hole 160 arranged on the first connecting part 110b of the second conductor 100b of the electrical connector 10 is shown demonstratively in Fig. 6. A second multi-directionally protruding mounting hole 170 arranged on the second connecting part 120b of the second conductor 100b of the electrical connector 10 is shown demonstratively in Fig. 7. It should be noted that each of the multi-directionally protruding mounting holes 150, 160, 170 may alternatively be arranged on other connecting parts. In such an embodiment, the first connecting part 110a, 110b, 110c and/or second connecting part 120a, 120b, 120c of the corresponding conductor 100a, 100b, 100c of the electrical connector 10 may be fixed to the corresponding motor busbar 210a, 210b, 210c and/or the corresponding module busbar 320a, 320b, 320c by means of a threaded connector passed through the corresponding multi-directionally protruding mounting hole 150, 160, 170. Such a manner of connection is detachable, which facilitates the overhaul, replacement or reuse of components. More specifically, as shown in the figures, each multi-directionally protruding mounting hole 150, 160, 170 may be configured to comprise a first elongated extension portion 151, 161, 171 and a second elongated extension portion 152, 162, 172, wherein the first elongated extension portion 151, 161, 171 extends in a first direction, and the second elongated extension portion 152, 162, 172 extends in a second direction which is different from the first direction. Thus, the multi-directionally protruding mounting hole 150, 160, 170 allows installation tolerance to be absorbed in the first direction and second direction. More specifically, as shown in Figs. 5 - 7, the second direction and the first direction may be configured to be mutually orthogonal. In a specific embodiment, as shown in Fig. 5, the second elongated extension portion 152 of the multi-directionally protruding mounting hole 150 terminates in the first elongated extension portion 151. In another specific embodiment, as shown in Figs. 6 - 7, the first elongated extension portion 161, 171 and the second elongated extension portion 162, 172 of the multi-directionally protruding mounting hole 160, 170 are configured to intersect each other.

In some embodiments, a multi-directionally protruding mounting hole as described above, referred to as a first multi-directionally protruding mounting hole 160 (as shown in Fig. 6), may be provided on the first connecting part 110b of one conductor, for example the second conductor 100b, and at the same time, a multi-directionally protruding mounting hole as described above, referred to as a second multi-directionally protruding mounting hole 170 (as shown in Fig. 7), may be provided on the second connecting part 120b of the second conductor 100b. In an embodiment (not shown), the first multi-directionally protruding mounting hole 160 and the second multi-directionally protruding mounting hole 170 may have the same orientation. In another embodiment, as shown in Figs. 6 and 7, a configuration is possible in which the first elongated extension portion 161 and the second elongated extension portion 162 of the first multi-directionally protruding mounting hole 160, and the first elongated extension portion 171 and the second elongated extension portion 172 of the second multi-directionally protruding mounting hole 170, extend in directions which are all different from one another, i.e. in four different directions, thereby allowing possible installation tolerances to be absorbed in four different directions. For example, this is especially suitable for use in embodiments in which the first connecting part 110b and the second connecting part 120b are configured to extend parallel to each other, or to be coplanar. Alternatively, a configuration is also possible in which one of the first elongated extension portion 161 and the second elongated extension portion 162 of the first multi-directionally protruding mounting hole 160 extends in the same direction as one of the first elongated extension portion 171 and the second elongated extension portion 172 of the second multi-directionally protruding mounting hole 170, and the other of the first elongated extension portion 161 and the second elongated extension portion 162 of the first multi-directionally protruding mounting hole 160 extends in the same direction as the other of the first elongated extension portion 171 and the second elongated extension portion 172 of the second multi-directionally protruding mounting hole 170. In another embodiment (not shown), the first connecting part 110b and the second connecting part 120b are configured to extend perpendicularly to each other, and the first multi-directionally protruding mounting hole 160 and the second multi-directionally protruding mounting hole 170 may be configured to allow installation tolerances to be absorbed in three mutually perpendicular directions.

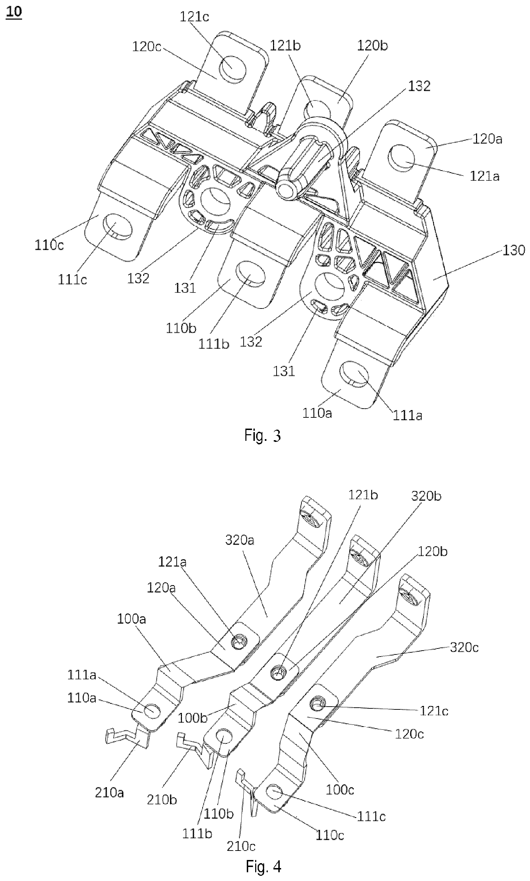

In some embodiments, as shown in Fig. 4, the conductors 100a, 100b, 100c of the electrical connector 10 are configured to be in the form of plates, and are configured to be deformable; such deformation ability allows installation tolerance to be absorbed in the direction of deformation.

In some embodiments, as shown in Figs. 1 - 4, the tolerance-absorbing structure may comprise a first tolerance-absorbing structure arranged on the first connecting part 110a, 110b, 110c of the corresponding conductor 100a, 100, 100c, and a second tolerance-absorbing structure arranged on the second connecting part 120a, 120b, 120c, wherein the first tolerance-absorbing structure is configured to absorb installation tolerance between the corresponding module busbar 320a, 320b, 320c and the motor busbar 210a, 210b, 210c in a first direction, and the second tolerance-absorbing structure is configured to absorb installation tolerance between the corresponding motor busbar 210a, 210b, 210c and the module busbar 320a, 320b, 320c in a second direction different from the first direction. In a specific embodiment, the first direction and the second direction are mutually orthogonal. Thus, in this embodiment, since the first tolerance-absorbing structure and the second tolerance-absorbing structure are provided on the electrical connector 10, installation tolerance can be reliably absorbed, i.e. compensated, in different first and second directions at the same time; this includes tolerance in the manufacture of the motor busbar 210a, 210b, 210c and the module busbar 320a, 320b, 320c, positioning tolerance therebetween, tolerance in the manufacture and positioning of the first connecting part 110a, 110b, 110c and second connecting part 120a, 120b, 120c of the conductor 100a, 100b, 100c of the electrical connector 10, etc.

In a specific embodiment, as shown in Figs. 1 - 4, the first tolerance-absorbing structure is a first elongated hole 111a, 111b, 111c elongated in a first direction on the first connecting part 110a, 110b, 110c. Additionally or alternatively: the second tolerance-absorbing structure is a second elongated hole 121a, 121b, 121c elongated in a second direction on the second connecting part 120a, 120b, 120c. More specifically, the first elongated hole 111a, 111b, 111c and the second elongated hole 121a, 121b, 121c each extend in an elongated shape. Specifically, the first elongated hole 111a, 111b, 111c and the second elongated hole 121a, 121b, 121c may each be closed or comprise at least one open end; as shown schematically in Fig. 8, the first elongated hole 111c arranged on the first connecting part 110c of the third conductor 100c comprises an open end. In such an embodiment, the first connecting part 110a, 110b, 110c and/or the second connecting part 120a, 120b, 120c of the conductor 100a, 100b, 100c may be fixed to the corresponding motor busbar 210a, 210b, 210c and/or the corresponding module busbar 320a, 320b, 320c by means of a threaded connector passed through the first elongated hole 111a, 111b, 111c and/or the second elongated hole 121a, 121b, 121c. Such a manner of connection is detachable, which facilitates the overhaul, replacement or reuse of components.

In some embodiments, as shown schematically in Fig. 4 in particular, the conductor 100a, 100b, 100c may be configured to be in the form of a plate and able to deform, for example elastically, in a third direction orthogonal to the first direction and second direction; this allows possible installation tolerances to be compensated in all directions.

In some embodiments, as shown in Figs. 1 - 3, the electrical connector 10 may further comprise an insulating holder 130, the insulating holder 130 being configured to cover a remaining portion of the conductor 100a, 100b, 100c other than the first connecting part 110a, 110b, 110c and the second connecting part 120a, 120b, 120c. This ensures electrical safety. In an embodiment, the insulating holder 130 may be overmoulded on the conductor, for example on the three conductors 100a, 100b, 100c. In an embodiment, the insulating holder 130 is configured to be elastically deformable. This allows corresponding deformation of the conductor 100a, 100b, 100c. More specifically, the insulating holder 130 is provided with hollowed-out parts 131, as shown in Fig. 3. The hollowed-out parts 131 enhance the elastic deformation ability of the insulating holder 130. In some embodiments, the insulating holder 130 may also be provided with a mounting structure 132, the mounting structure 132 being configured to be mounted to the electric motor 20 or the electric power module 30; in the figures, it is shown as being mounted to the electric motor 20, e.g. mounted to the electric motor 20 by means of a threaded connector.

Another aspect of the present disclosure relates to an electric drive unit 1, as partially shown in Fig. 1, comprising an electric power module 30 and an electric motor 20, and also comprising an electrical connector 10 according to any one of the embodiments described above, and thus having corresponding advantages.

Another aspect of the present disclosure relates to a vehicle, comprising the electric drive unit 1 as described above. The vehicle may be an electrified vehicle, such as a battery electric vehicle (BEV), a hybrid electric vehicle (HEV), a plugin hybrid electric vehicle (PHEV), a range extended EV or a fuel cell electric vehicle (FCEV). The vehicle may also be a hydrogen-powered vehicle.

Demonstrative embodiments of the electrical connector and electric drive unit proposed in the present invention have been described in detail above with reference to preferred embodiments. However, those skilled in the art will understand that without departing from the concept of the present invention, various modifications and alterations may be made to the specific embodiments above, and various technical features and structures proposed in the present invention may be combined in various ways, without exceeding the scope of protection of the present invention.

The scope of the present disclosure is not defined by the embodiments described above, but by the appended claims and their equivalent scope.

## Claims

1. An electrical connector (10), wherein the electrical connector (10) is used for electrically connecting an electric motor (20) to an electric power module (30), and the electrical connector (10) comprising at least one conductor (100a, 100b, 100c), and each conductor (100a, 100b, 100c) comprising:
a first connecting part (110a, 110b, 110c), configured to be connected to a motor busbar (210a, 210b, 210c) of the electric motor (20);
a second connecting part (120a, 120b, 120c), configured to be connected to a module busbar (320a, 320b, 320c) of the electric power module (30);
wherein the electrical connector (10) further comprises a tolerance-absorbing structure arranged on at least one of the first connecting part (110a, 110b, 110c) and the second connecting part (120a, 120b, 120c) on the corresponding conductor (100a, 100b, 100c), and the tolerance-absorbing structure is configured to absorb installation tolerance between the motor busbar (210a, 210b, 210c) and the corresponding module busbar (320a, 320b, 320c) in at least two different directions.

2. The electrical connector (10) according to Claim 1, wherein the tolerance-absorbing structure comprises a multi-directionally protruding mounting hole (150, 160, 170), and the multi-directionally protruding mounting hole (150, 160, 170) is configured to have protruding parts in multiple directions, to allow the installation tolerance to be absorbed in multiple directions.

3. The electrical connector (10) according to Claim 2, wherein each said multi-directionally protruding mounting hole (150, 160, 170) is configured to comprise a first elongated extension portion (151, 161, 171) and a second elongated extension portion (152, 162, 172), wherein the first elongated extension portion (151, 161, 171) extends in a first direction, and the second elongated extension portion (152, 162, 172) extends in a second direction different from the first direction.

4. The electrical connector (10) according to Claim 3, wherein:
the second elongated extension portion terminates in the first elongated extension portion; or
the first elongated extension portion and the second elongated extension portion are configured to intersect each other.

5. The electrical connector (10) according to Claim 4, wherein the conductor (100a, 100b, 100c) comprises a first multi-directionally protruding mounting hole arranged on the first connecting part and a second multi-directionally protruding mounting hole arranged on the second connecting part, wherein:
the first elongated extension portion and the second elongated extension portion of the first multi-directionally protruding mounting hole, and the first elongated extension portion and the second elongated extension portion of the second multi-directionally protruding mounting hole, extend in directions which are all different from one another; or
one of the first elongated extension portion and the second elongated extension portion of the first multi-directionally protruding mounting hole extends in the same direction as one of the first elongated extension portion and the second elongated extension portion of the second multi-directionally protruding mounting hole, and the other of the first elongated extension portion and the second elongated extension portion of the first multi-directionally protruding mounting hole extends in the same direction as the other of the first elongated extension portion and the second elongated extension portion of the second multi-directionally protruding mounting hole.

6. The electrical connector (10) according to Claim 1, wherein:
the first connecting part (110a, 110b, 110c) is provided with a first tolerance-absorbing structure, and the first tolerance-absorbing structure is configured to absorb installation tolerance between the motor busbar (210a, 210b, 210c) and the module busbar (320a, 320b, 320c) in a first direction;
the second connecting part (120a, 120b, 120c) is provided with a second tolerance-absorbing structure, the second tolerance-absorbing structure is configured to absorb installation tolerance between the motor busbar (210a, 210b, 210c) and the module busbar (320a, 320b, 320c) in a second direction different from the first direction.

7. The electrical connector (10) according to Claim 6, wherein the first direction and the second direction are mutually orthogonal.

8. The electrical connector (10) according to Claim 7, wherein:
the first tolerance-absorbing structure is a first elongated hole (111a, 111b, 111c) elongated in the first direction; and/or
the second tolerance-absorbing structure is a second elongated hole (121a, 121b, 121c) elongated in the second direction.

9. The electrical connector (10) according to any one of Claims 1 - 8, wherein:
the first connecting part (110a, 110b, 110c) and the second connecting part (120a, 120b, 120c) are configured to be parallel to each other or coplanar; or
the first connecting part (110a, 110b, 110c) and the second connecting part (120a, 120b, 120c) are configured to be transverse or perpendicular to each other.

10. The electrical connector (10) according to Claim 7 or 8, wherein the conductor (100a, 100b, 100c) is configured to be in the form of a plate and able to deform in a third direction which is orthogonal to the first direction and the second direction.

11. The electrical connector (10) according to any one of Claims 1 - 8, wherein the electrical connector (10) comprises three conductors (100a, 100b, 100c), and each of the conductors (100a, 100b, 100c) is configured to be connected to one phase of the electric motor (20).

12. The electrical connector (10) according to any one of Claims 1 - 8, wherein the electrical connector (10) further comprises an insulating holder (130), and the insulating holder (130) covers a remaining portion of the conductor (100a, 100b, 100c) other than the first connecting part (110a, 110b, 110c) and the second connecting part (120a, 120b, 120c).

13. The electrical connector (10) according to Claim 12, wherein the insulating holder (130) is configured to be elastically deformable, and the insulating holder (130) is provided with a hollowed-out part (131), and the insulating holder (130) is provided with a mounting structure (132), and the mounting structure (132) is configured to be mounted to the electric motor (20) or the electric power module (30).

14. An electric drive unit (1), comprising an electric power module (30) and an electric motor (20), and comprising the electrical connector (10) according to any one of Claims 1 - 13.

15. A vehicle, comprising the electric drive unit (1) according to Claim 14.
